## Europäisches Patentamt
## European Patent Office
## Office européen des brevets

(11) Veröffentlichungsnummer : **0 100 415**
**B1**

(12) **EUROPÄISCHE PATENTSCHRIFT**

(45) Veröffentlichungstag der Patentschrift :
**03.12.86**

(51) Int. Cl.⁴ : **F 16 D   3/62**

(21) Anmeldenummer : **83105732.8**

(22) Anmeldetag : **11.06.83**

(54) **Elastische Kupplung.**

(30) Priorität : **04.08.82 DE 3229105**

(43) Veröffentlichungstag der Anmeldung :
**15.02.84 Patentblatt 84/07**

(45) Bekanntmachung des Hinweises auf die Patenterteilung : **03.12.86 Patentblatt 86/49**

(84) Benannte Vertragsstaaten :
**AT BE DE FR GB IT NL SE**

(56) Entgegenhaltungen :
**DE-B- 2 525 009**
**DE-U- 7 411 513**
**NL-B-    69 855**

(73) Patentinhaber : **Maschinenfabrik Stromag GmbH**
**Hansastrasse 120**
**D-4750 Unna (DE)**

(72) Erfinder : **Rüggen, Werner**
**Lessingstrasse 7**
**D-4755 Holzwickede (DE)**
Erfinder : **Darenberg, Dietwald**
**Ostholz 16**
**D-5758 Fröndenberg-Ardey (DE)**
Erfinder : **Kiesenberg, Karl-Heinz**
**Kühlstrasse 27**
**D-4750 Unna-Hemmerde (DE)**
Erfinder : **Kerstin, Gunther**
**Wilhelmstrasse 14**
**D-4770 Soest (DE)**

(74) Vertreter : **Wilhelm, Hans-Herbert, Dr.-Ing. et al**
**Wilhelm & Dauster Patentanwälte Hospitalstrasse 8**
**D-7000 Stuttgart 1 (DE)**

Jouve, 18, rue St-Denis, 75001 Paris, France

## Beschreibung

Die Erfindung betrifft eine elastische Kupplung, bestehend aus zwei Kupplungshälften, die untereinander durch aus elastischem Vollmaterial bestehenden und mit Gewebeeinlagen versehenen Laschen verbunden sind, welche jeweils von Bolzen gehalten sind, die auf verschiedenen Durchmessern jeweils einer der beiden Kupplungshälften zugeordnet sind, wobei die Verbindungsgerade von zwei einer Lasche zugeordneten und auf verschiedenen Durchmessern liegenden Bolzen unter einem Winkel zu dem durch den inneren Bolzen gelegten Radius verläuft.

Eine derartige elastische Kupplung ist aus der DE-B-25 25 009 bekannt. Dort sind Laschen vorgesehen, die jeweils zwei auf verschiedenen Durchmessern liegende Bolzen miteinander verbinden. Die Laschen sind in Form von Schlingen ausgebildet, wobei innerhalb der Schlingen elastisch verformbare Druckkörper angeordnet sind, die ihrerseits mit einem Strömungsmedium gefüllte Hohlkörper aufweisen. Diese besondere Anordnung der Schlingen mit den Hohlkörpern dient ausschließlich dazu, die elastische Kupplung als Dämpfungsglied auszugestalten, bei dem die Dämpfung geschwindigkeitsabhängig ist. Abgesehen vom hohen technischen Aufwand sind diese speziellen Dämpfungseigenschaften der beschriebenen elastischen Kupplung in manchen Fällen nicht erwünscht.

Weitere elastische Kupplungen sind beispielsweise aus dem Dokument DE-U-74 11 513 bekannt. Dort sind die einzelnen Laschen jeweils radial ausgerichtet und über den Umfang verteilt. Sie werden unter Vorspannung mit den beiden Kupplungshälften verbunden, was dadurch geschieht, daß das dort vorgesehene Verstärkungsgewebe durch Auseinanderziehen der Befestigungshülsen der Laschen gestreckt oder nahezu gestreckt wird, wobei das dazwischenliegende elastische Material zusammengedrückt wird und nach der Montage die Vorspannung bewirkt. Die durch solche Bauarten erreichbare Beeinflussung der Kennlinien geht aber mit dem Nachteil einher, daß die Montage solcher elastischer Kupplungen nur sehr aufwendig vorgenommen werden kann. Werden die Laschen im ungespannten Zustand eingesetzt, so tritt der Nachteil auf, daß die übertragbaren Drehmomente erst bei einem beträchtlichen Verdrehwinkel der beiden Kupplungshälften gegeneinander auf größere Werte ansteigen, während bei kleineren Drehwinkeln nur ein unbedeutender Anstieg zu verzeichnen ist. Kupplungen dieser Art sind daher sehr « weich ». Für manche Fälle ist es aber erwünscht, daß die Kennlinie aus dem Nullpunkt heraus schneller ansteigt, d. h., daß die Kupplung beim Anfahren weniger weich ist, dafür aber die Progression der Kennlinie bei größerem Verdrehwinkel weniger groß als bei bekannten Bauarten ist.

Der Erfindung liegt die Aufgabe zugrunde, eine schneller ansprechende, aber mit zunehmendem Verdrehwinkel mehr zu einer gleichmäßigen Progression neigende elastische Kupplung zu schaffen.

Gelöst wird die Aufgabe dadurch, daß bei einer elastischen Kupplung der eingangs genannten Art die Laschen aus jeweils einem mit drei Führungsbohrungen für die Bolzen ausgerüsteten Bauteil bestehen, bei dem die Führungsbohrungen an den Ecken eines gleichschenkligen Dreiecks angeordnet sind.

Eine derartige erfindungsgemäße Kupplung hat u. a. die folgenden Vorteile :

— Durch die Schrägstellung der Verbindungsgerade wird der Nullpunkt der Kennlinie der Kupplung verschoben.

— Durch die Ausbildung und Anordnung der Laschen kann eine geringere Progression der Kennlinie der Kupplung erreicht werden.

— Durch die dreieckförmige Ausgestaltung der Laschen ist es möglich, eine flach verlaufende Kennlinie der Kupplung zu verwirklichen.

Die Ausführung mit schräggestellten Laschen besitzt in ihrer Ausgangslage noch ungespannte Gewebelagen bzw. diese fangen erst an sich zu spannen, wenn die Verdrehung der beiden Kupplungshälften beginnt. Die Federsteife einer solchen Kupplung ist daher im Nullpunkt größer, aber ihre Progression ist im weiteren Verlauf nicht so steil. Daß diese Wirkung zustande kommt, liegt u. a. daran, daß die vorzugsweise als Gummielemente ausgebildeten Laschen — wenn gleiche Teilkreisdurchmesser der Drehpunkte vorausgesetzt werden — aufgrund der schräggestellten Ausführung eine größere Länge haben als bei einer rein radialen Anordnung. Die Federsteife kann daher aufgrund der größeren Länge geringer sein, weil bei gleicher Kraftwirkung eine größere Verlängerung der Elementenachse zustande kommt. Die Steifigkeit kann auch noch durch den Abstand der Befestigungsbolzen beeinflußt werden.

Durch die Ausgestaltung der Lasche als dreieckförmiges Bauteil, in dessen Ecken Führungsbohrungen angeordnet sind, kann das Versteifungsgewebe eine relativ große Länge erhalten, so daß derartige Laschen eine geringe Federsteife aufweisen. Dies bewirkt, wie erwähnt wurde, eine flach verlaufende Kennlinie der Kupplung.

Innerhalb der Gewebeeinlage können in dem dort vorzugsweise vorgesehenen elastischen Material Belüftungsöffnungen vorgesehen werden, wie das an sich auch bei anderen Bauarten schon vorgeschlagen wurde. Es ist aber auch möglich, die Gewebeeinlage im Bereich zwischen den Führungsbohrungen nicht längs den Seiten des gleichschenkligen Dreiecks gestreckt verlaufen zu lassen, sondern sie durch elastisches Material in einer ungestreckten Lage zu halten, d. h. die Gewebeeinlage wesentlich länger auszubilden als es dem Umfang des gleichschenkligen Dreiecks entspricht. Durch diese Ausgestaltung wird eine größere wirksame Länge der Gewebeeinlagen erhalten. Die nutzbare Gewebedehnung ist damit größer als es sich aus der reinen Länge des Umfanges des gleichschenkligen Dreieckes ergibt, an dessen Ecken die Führungshülsen für die Bolzen angeordnet sind. Damit und auch mit der Form der Gewebe selbst läßt sich die Neigung der Kennlinie der Kupplung ausreichend stark beeinflussen.

Aus Montagegründen ist es vorteilhaft, wenn mehrere Laschen an einem Montageband angeordnet sind oder wenn mehrere Laschen an einem Montagering angebracht sind. Die beiden Kupplungshälften können dann durch das Ansetzen einer Verbindungseinheit, nämlich der eigentlichen elastischen Einheit untereinander verbunden werden. Wie auch bei anderen Bauarten üblich, ist es zweckmäßig, wenn alle Laschen in der Form von Gummielementen mit oder ohne Gewebeeinlagen ausgebildet sind, weil sich Gummi für die Drehmomentübertragung als besonders vorteilhaft erwiesen hat.

Die Erfindung ist anhand von Ausführungsbeispielen in der Zeichnung dargestellt und in der nachfolgenden Beschreibung erläutert. Es zeigen

Figur 1 eine schematische Darstellung einer Anordnung einer zweiteiligen Lasche an einem gemeinsamen inneren Bolzen und zwei symmetrisch zu der durch diesen Bolzen gelegten Radialebene angeordneten äußeren Bolzen nach dem Stand der Technik,

Figur 2 die perspektivische Darstellung einer Anordnung einer weiteren zweiteiligen Lasche nach dem Stand der Technik,

Figur 3 den Verlauf der Kennlinien einer erfindungsgemäßen und einer bekannten Kupplung,

Figur 4 die Gesamtanordnung des elastischen Teils für eine erfindungsgemäße Kupplung, bei der jeweils Laschen mit drei Führungsbohrungen für die Befestigungsbolzen verwendet sind,

Figur 5 ein einzelnes der in der Fig. 4 verwendeten laschenförmigen Gummielemente, schematisch im Querschnitt gezeichnet,

Figur 6 ein Gummielement ähnlich Fig. 5, jedoch in einer anderen Ausführungsform,

Figur 7 ein Gummielement ähnlich Fig. 5, jedoch in einer abgewandelten Ausführung,

Figur 8 ein Gummielement ähnlich Fig. 5, das jedoch in Scheibenform ausgebildet ist,

Figur 9 mehrere Gummielemente gemäß Fig. 5, die auf einem gemeinsamen Montageband angeordnet sind und

Figur 10 mehrere Gummielemente gemäß Fig. 5, die an einem Montagering anvulkanisiert sind.

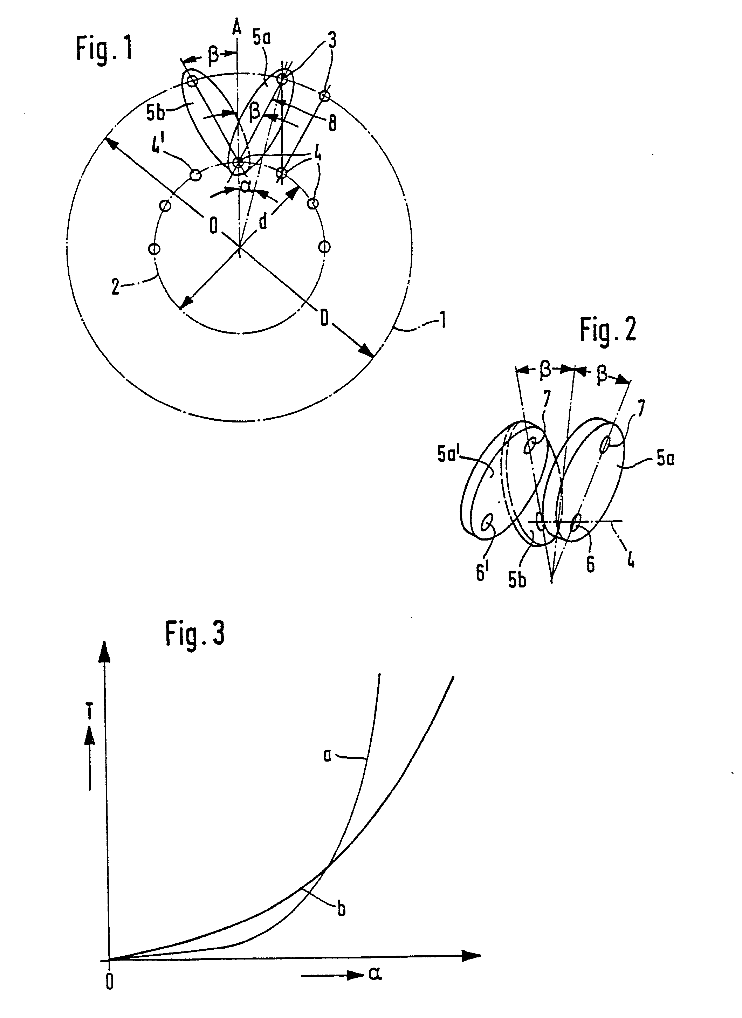

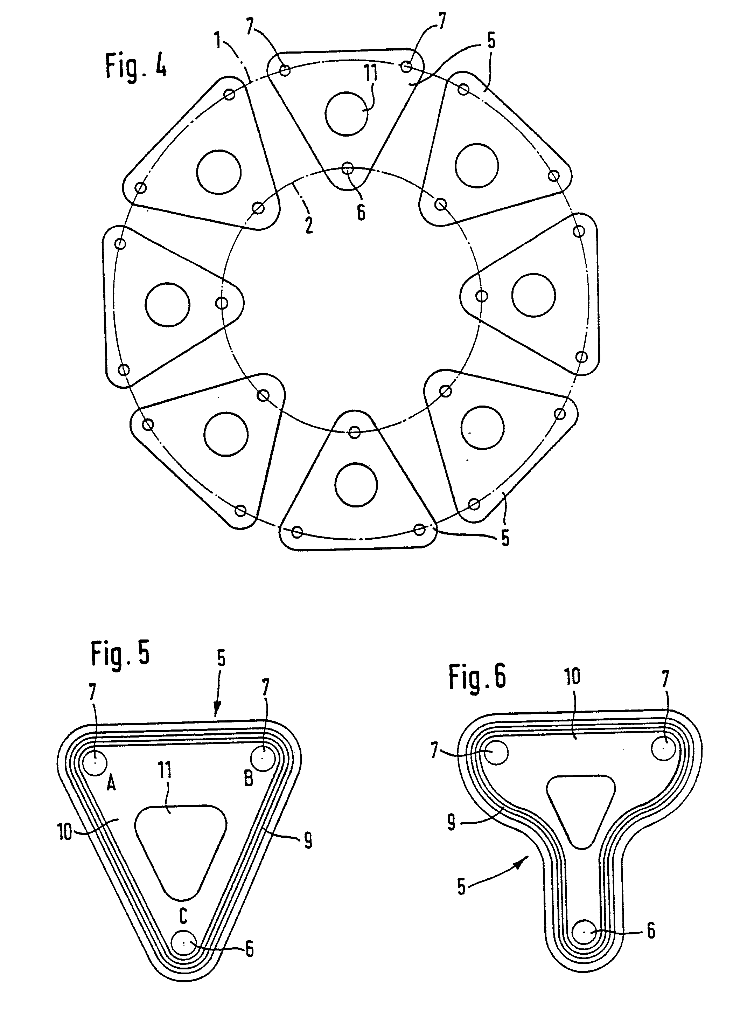

In der Fig. 1 sind schematisch die beiden Teilkreisdurchmesser 1 und 2 mit dem Durchmesser D bzw. d dargestellt, auf denen in bestimmten Abständen, die im einzelnen der Fig. 4 zu entnehmen sind, Befestigungsbolzen 3 bzw. 4 angeordnet sind, von denen die Befestigungsbolzen 3, die auf dem Teilkreis 1 mit dem größeren Durchmesser D liegen, einer von zwei nicht dargestellten, weil in üblicher Weise ausgebildeten Kupplungshälfte und die Bolzen 4 auf dem Teilkreisdurchmesser der anderen Kupplungshälfte zugeordnet sind. Beide Kupplungshälften, die in üblicher Weise aus einer mit einer Welle verbundenen Nabe und einem mit den Bolzen 3 bzw. 4 versehenen Kupplungsflansch bestehen, werden untereinander durch die elastischen Laschen 5a bzw. 5b miteinander verbunden, von denen in der Fig. 1 nur zwei gezeigt sind, in der Praxis aber mehrere gleich angeordnete vorgesehen sind, die jeweils von allen Bolzen 4 des inneren Teilkreisdurchmessers 2 zu den entsprechenden Bolzen 3 des äußeren Teilkreisdurchmessers 1 führen. Wie aus Fig. 1 aber zu erkennen ist, sind einem auf dem inneren Teilkreisdurchmesser 2 liegenden Bolzen 4 jeweils zwei Laschen 5a bzw. 5b zugeordnet, die elliptische Form aufweisen, mit einer inneren Führungsbohrung 6 und einer äußeren Führungsbohrung 7, vorzugsweise mit einer Führungshülse versehen sind und so angeordnet sind, daß die Verbindungsgerade zwischen den Mittelpunkten der Führungsöffnungen 6 und 7 unter einem Winkel β zu der Verbindungslinie O-A verläuft, welche einem durch den Mittelpunkt des inneren Bolzens 4 und durch den Mittelpunkt der Führungsöffnung 6 verlaufenden Radius entspricht. Die Lasche 5b ist ebenfalls um den Winkel β gegenüber diesem Radius geneigt, jedoch in umgekehrtem Sinn, so daß beide Laschen 5a und 5b spiegelsymmetrisch zu der durch den Radius O-A gegebenen Ebene angeordnet sind.

Wie aus Fig. 2 hervorgeht, können die an die Laschen 5a und 5b anschließenden weiteren Laschen jeweils als den einen äußeren Befestigungsbolzen 3 jenen benutzen, der durch die Führungsöffnung 7 der Lasche 5b verläuft. Die innere Führungsöffnung 6' der Lasche 5a' würde, verglichen mit Fig. 1, auf dem Befestigungsbolzen 4' des inneren Teilkreisdurchmessers 2 angeordnet werden. In analoger Weise können alle weiteren Laschenpaare verteilt werden. Es ist allerdings nicht notwendig, daß die verschiedenen Laschenpaare jeweils an einem gemeinsamen äußeren Befestigungsbolzen 3 angreifen. Der innere Befestigungsbolzen 4 für zwei einander zugeordnete und symmetrisch zu einem Radius ausgerichtete Laschen 5a und 5b allerdings wird als gemeinsamer Anlenkungsbolzen benutzt.

Aus der Fig. 3 geht hervor, daß mit größerem Verdrehwinkel α (siehe Fig. 1) zwischen den beiden Kupplungshälften, d. h. also auch zwischen den konzentrisch zueinander liegenden Befestigungsbolzen 3 und 4 sich eine Kennlinie b ergibt, die schon vom Nullpunkt aus progressiv verläuft und eine verhältnismäßig flache Steigung gegenüber der Kennlinie a einer elastischen Kupplung aufweist, die einer bekannten Bauart entspricht, bei der die einzelnen Laschen nicht, wie in Fig. 1 gezeigt, schräg verlaufen, sondern jeweils radial gerichtet sind. In Fig. 3 ist auf der Ordinate das von der Kupplung ausgeübte Drehmoment aufgrund ihres Federverhaltens aufgetragen. Es ist zu erkennen, daß die Kennlinie b schon bei geringen Verdrehwinkeln größere Drehmomente als die Kennlinie a übertragen kann, daß sie aber bei größeren Drehmomenten und dadurch bedingten größeren Verdrehwinkeln wesentlich weicher ist.

Aus den Fig. 4 und 5 ist zu erkennen, daß anstelle der beiden symmetrisch zu dem Radius O-A angeordneten Teillaschen 5a, 5b auch Laschen 5 in Dreieckform eingesetzt werden können, bei denen die Führungsöffnungen 6 bzw. 7 an den Ecken eines gleichschenkligen Dreiecks angeordnet sind, bei dem die Abschnitte A-C und B-C jeweils gleich lang ausgebildet sind. Die Führungsöffnungen 6 bzw. 7 können in an sich bekannter Weise jeweils mit Führungshülsen für die Bolzen 3 bzw. 4 versehen sein. Um diese Führungshülsen ist eine Gewebeverstärkung 9 herumgelegt, die im Ausführungsbeispiel der Fig. 5 zwischen den Punkten A, B und C gestreckt verlaufend angeordnet ist. Innerhalb des von den Gewebestreifen 9 eingegrenzten Raumes ist ein gummielastisches Material 10 vorgesehen, in dessen inneren Bereich eine ebenfalls etwa dreieckförmige Aussparung 11 in Form einer durchgehenden Öffnung vorgesehen ist. Diese Öffnung 11 dient zur Belüftung der einzelnen Gummielemente während des Betriebes. Fig. 4 zeigt, daß die Belüftungsöffnungen 11 auch kreisförmig ausgebildet sein können. Fig. 4 zeigt außerdem, daß jedes der einzelnen laschenförmigen Gummielemente 5 an drei Punkten, nämlich mit der inneren Führungsöffnung 6 auf dem inneren Teilkreis 2 und mit den beiden äußeren Führungsöffnungen 7 auf dem äußeren Teilkreis 1 befestigt werden. Diese Art der Befestigung ergibt eine spielfreie Anordnung.

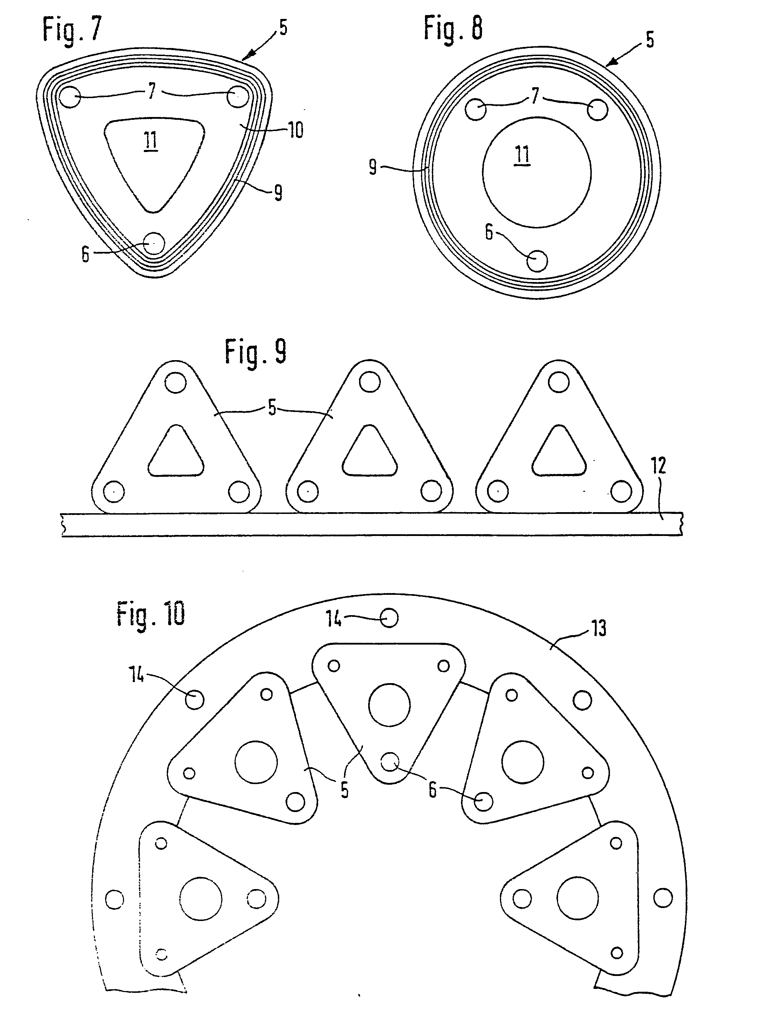

Aus den Fig. 6, 7 und 8 ist zu erkennen, daß das Verstärkungsgewebe 9 nicht unbedingt gestreckt zwischen den Führungsöffnungen 6 und 7 verlaufen muß. Vielmehr kann es unter Zuhilfenahme des elastischen Materiales 10 zumindestens zwischen den Führungsöffnungen 7 und 6, so wie in Fig. 6 gezeigt, in ungestrecktem Zustand bogenförmig verlaufend angeordnet sein, so daß in diesem Bereich eine gewisse Reserve an Gewebelänge zur Verfügung steht, die im Betrieb dafür sorgt, daß die Kennlinie b flach ansteigend verläuft. Bedingt ist dies dadurch, daß mit zunehmendem Verdrehwinkel α zuerst ein Bereich durchfahren werden muß, in dem das Gewebe 9 bis zur Streckung gelangt, wonach erst dann die Federsteifigkeit des als Gummielement ausgebildeten Laschenteils 5 zunimmt. Gleiches gilt für die Ausführungsformen der Fig. 7 und 8, bei denen eine ungestreckte Lage des Gewebes 9 nicht nur zwischen den Führungsöffnungen 7 und 6, sondern auch zwischen den beiden im äußeren Teilkreis 2 zugeordneten Führungsöffnungen 7 vorgesehen ist. Diese Ausführungsformen ermöglichen eine weitgehende Anpassung der Kennlinie an die gewünschten Gegebenheiten.

Die Fig. 9 und 10 zeigen Möglichkeiten für eine montagefreundliche Anordnung der einzelnen Laschen 5. Diese sind in Fig. 9 auf einem gemeinsamen Montageband 12 befestigt, das bei der Montage entsprechend gebogen wird, um alle Laschen untereinander unverlierbar zusammenzuhalten und montieren zu können. Fig. 10 zeigt die einzelnen Laschen 5 an einem Montagering 13 anvulkanisiert, der seinerseits mit Befestigungsöffnungen 14 zum Anschrauben an die den äußeren Kupplungsring aufweisende Kupplungshälfte versehen ist. An der inneren Kupplungshälfte werden dann die Laschen 5 mit ihren inneren Führungsöffnungen 6 angebracht. Das umständliche Montieren einzelner Laschen 5 entfällt auf diese Weise.

## Patentansprüche

1. Elastische Kupplung, bestehend aus zwei Kupplungshälften, die untereinander durch aus elastischem Vollmaterial (10) bestehenden und mit Gewebeeinlagen (9) versehenen Laschen (5) verbunden sind, welche jeweils von Bolzen (3, 4) gehalten sind, die auf verschiedenen Durchmessern (1, 2) jeweils einer der beiden Kupplungshälften zugeordnet sind, wobei die Verbindungsgerade (8) von zwei einer Lasche (5, 5a, 5b) zugeordneten und auf verschiedenen Durchmessern (1, 2) liegenden Bolzen (3, 4) unter einem Winkel (β) zu dem durch den inneren Bolzen (4) gelegten Radius (O-A) verläuft, dadurch gekennzeichnet, daß die Laschen (5) aus jeweils einem mit drei Führungsbohrungen (6, 7) für die Bolzen (3, 4) ausgerüsteten Bauteil bestehen, bei dem die Führungsbohrungen (6, 7) an den Ecken eines gleichschenkligen Dreiecks angeordnet sind.

2. Elastische Kupplung nach Anspruch 1, dadurch gekennzeichnet, daß die Führungsbohrungen (6, 7) mit Hülsen versehen sind und daß um alle drei Führungsbohrungen (6, 7) eine gemeinsame Gewebeeinlage (9) herumgelegt ist.

3. Elastische Kupplung nach Anspruch 1 oder 2, dadurch gekennzeichnet, daß die Laschen (5) im Bereich innerhalb der Gewebeeinlage (9) mit Belüftungsöffnungen (11) versehen sind.

4. Elastische Kupplung nach einem der Ansprüche 1 bis 3, dadurch gekennzeichnet, daß die Gewebeeinlage (9) im Bereich zwischen den Führungsbohrungen (6, 7) durch elastisches Material (10) in einer ungestreckten Lage gehalten ist (Fig. 6, 7 und 8).

5. Elastische Kupplung nach einem der Ansprüche 1 bis 4, dadurch gekennzeichnet, daß mehrere Laschen (5) an einem Montageband (12) angebracht sind.

6. Elastische Kupplung nach einem der Ansprüche 1 bis 4, dadurch gekennzeichnet, daß mehrere Laschen (5) an einem Montagering (13) angebracht sind.

## Claims

1. A resilient coupling comprising two coupling-halves, which are connected to one another by means of links (5) comprising resilient filling material (10) and provided with woven inserts (9), which links are respectively located on pins (3, 4) respectively arranged, at different diameters (1, 2), on corresponding halves of the coupling, the direction (8) of connection between two pins (3, 4) assembled with a link (5, 5a, 5b) and lying on different diameters (1, 2) forming an angle (β) to the radius (O-A) passing through the inner pin (4), characterised in that each link (5) consists of a component having three guide bores (6, 7) for the pins (3, 4) which component is configured so that the guide bores (6, 7) are arranged at the corners of an equilateral triangle.

2. A resilient coupling according to Claim 1, characterised in that the guide bores (6, 7) are provided with bushes, and that all three guide bores (6, 7) are surrounded by a common woven insert (9).

3. A resilient coupling according to Claim 1 or 2, characterised in that the links (5) are provided with ventilation openings (11) in the region within the woven insert (9).

4. A resilient coupling according to any one of Claims 1 to 3, characterised in that the woven insert (9) is located in an unstretched position, in the region between the guide bores (6, 7) by means of resilient material (10), (Fig. 6, 7 and 8).

5. A resilient coupling according to one of Claims 1 to 4, characterised in that a plurality of links (5) are arranged on a single mounting band (12).

6. A resilient coupling according to one of Claims 1 to 4, characterised in that a plurality of links (5) are arranged on a single mounting ring (13).

## Revendications

1. Accouplement élastique se composant de deux demi-accouplements qui sont reliés l'un à l'autre par des éléments de liaison sous forme de plaquettes (5) faits de matière élastique pleine (10) et munis de garnitures de tissu (9), éléments de liaison ou plaquettes qui sont maintenus chacun par des boulons (3, 4) prévus respectivement au niveau des diamètres différents des cercles primitifs (1, 2) des deux demi-accouplements, la droite de jonction (8) reliant deux boulons (3, 4) adjoints à un élément de liaison ou plaquette (5, 5a, 5b) qui se trouvent au niveau des diamètres différents des cercles primitifs (1, 2) formant un angle (β) avec le rayon (O-A) passant par le boulon interne (4), l'accouplement élastique étant caractérisé en ce que les éléments de liaison se présentant sous forme de plaquettes (5) sont constitués chacun par un élément de construction percé de trois trous de guidage (6, 7) pour les boulons (3, 4), les trous de guidage (6, 7) étant prévus aux angles d'un triangle isocèle.

2. Accouplement élastique suivant la revendication 1, caractérisé en ce que les trous de guidage (6, 7) sont munis de douilles et en ce qu'une garniture de tissu commune (9) entoure les trois trous de guidage (6, 7).

3. Accouplement élastique suivant l'une ou l'autre des revendications 1 et 2, caractérisé en ce que les éléments de liaison se présentant sous forme de plaquettes (5) sont, dans la zone interne par rapport à la garniture de tissu (9), percés de passages d'aération (11).

4. Accouplement élastique suivant l'une quelconque des revendications 1 à 3, caractérisé en ce que la garniture de tissu (9) est, de l'un à l'autre des trous de guidage (6, 7), maintenue à l'état non tendu par la matière élastique (10) (figures 6, 7 et 8).

5. Accouplement élastique suivant l'une quelconque des revendications 1 à 4, caractérisé en ce que plusieurs éléments de liaison se présentant sous forme de plaquettes (5) sont fixés à une bande de montage (12).

6. Accouplement élastique suivant l'une quelconque des revendications 1 à 4, caractérisé en ce que plusieurs éléments de liaison se présentant sous forme de plaquettes (5) sont fixés à un anneau de montage (13).

Fig. 1

Fig. 2

Fig. 3

0 100 415

Fig. 4

Fig. 5

Fig. 6

Fig. 7

Fig. 8

Fig. 9

Fig. 10